# EUROPÄISCHE PATENTSCHRIFT

(11) **EP 3 689 118 B1**
(45) Veröffentlichungstag und Bekanntmachung des Hinweises auf die Patenterteilung: **26.10.2022**
(21) Anmeldenummer: 20153570.5
(22) Anmeldetag: 24.01.2020
(51) Int. Cl.: A01B 69/00, A01B 59/042, B60D 1/145, B60D 1/44, B60D 1/46, A01B 71/06, B60D 1/00

(54) **LANDWIRTSCHAFTLICHES ARBEITSGERÄT, DEICHSELVORRICHTUNG UND ZUGFAHRZEUG-ARBEITSGERÄT-KOMBINATION**
AGRICULTURAL WORKING DEVICE, DRAWBAR DEVICE AND TRACTION VEHICLE WORKING DEVICE COMBINATION
OUTIL DE TRAVAIL AGRICOLE, TIMON ET COMBINAISON DE VÉHICULE DE TRACTION ET D'OUTIL DE TRAVAIL

(30) Priorität: 01.02.2019 DE 102019201337
(43) Veröffentlichungstag der Anmeldung: 05.08.2020
(73) Patentinhaber: Deere & Company, Moline, IL 61265 (US)
(72) Erfinder: Guiet, Lionel, 68163 Mannheim (DE)
(74) Vertreter: Stein, Stefan

(56) Entgegenhaltungen:
- EP-A1- 2 082 637
- EP-B1- 2 082 637
- WO-A1-2013/175097
- US-A- 5 255 756
- US-A1- 2018 228 075

## Beschreibung

Die Erfindung betrifft ein landwirtschaftliches Arbeitsgerät gemäss dem Oberbegriff des unabhängigen Anspruchs 1 und eine Zugfahrzeug-Arbeitsgerät-Kombination gemäß dem Oberbegriff des Anspruchs 9.

Landwirtschaftliche Arbeitsgeräte mit einer Deichselvorrichtung zum Ziehen des Arbeitsgeräts mit einem Zugfahrzeug sind bekannt. Dabei ist die Deichselvorrichtung an einem Ende mittels eines ersten Schwenklagers an einem der Deichselvorrichtung nachlaufenden Arbeitsgeräteteil des landwirtschaftlichen Arbeitsgeräts um eine horizontale Querachse schwenkbar gelagert.

In der DE 27 10 097 wird landwirtschaftliches Arbeitsgerät, hier eine Rundballenpresse, mit einer Deichselvorrichtung offenbart, bei welcher die Deichsel, die mittels eines ersten Schwenklagers am nachlaufenden Arbeitsgeräteteil schwenkbar gelagert ist, gegenüber dem nachlaufenden Arbeitsgeräteteil verschwenkbar ist, also abknicken kann. Die EP 2 082 637 A1 offenbart ebenfalls ein gezogenes landwirtschaftliches Arbeitsgerät, das seitlich der Spur des Zugfahrzeugs laufen kann, indem die Deichsel gegenüber dem nachlaufenden Arbeitsgeräteteil einstellbar ist. Die WO 2013/175097 A1, US 2018/228075 A1 und die US 5 255 756 A offenbaren Arbeitsgeräte bei welchen die Deichselvorrichtung und der nachlaufende Arbeitsgeräteteil zueinander verschwenkbar sind.

Der Stand der Technik zeigt einen Mangel hinsichtlich der Variabilität ein Einstellbarkeit des Arbeitsgeräts, insbesondere der Höhe der Deichselvorrichtung und/oder des nachlaufenden Arbeitsgeräteteil. Darüber hinaus kann im Betriebszustand des Arbeitsgeräts aufgrund eines Verdrehens, Ziehens oder Kippen des nachlaufenden Arbeitsgeräteteils ein Drehmoment oder ein Kraft derart an der Verbindung zwischen der Deichselvorrichtung und dem nachlaufenden Arbeitsgeräteteil angreifen, dass dieses beschädigt oder sogar zerstört wird. Somit ist ein wesentliches Problem der bekannten Arbeitsgeräte mit Deichselvorrichtungen, dass diese konstruktiv zu unflexibel ausgestaltet sowie störanfällig und instabil sind.

Ausgehend von diesem Stand der Technik ist es daher eine Aufgabe der vorliegenden Erfindung ein landwirtschaftliches Arbeitsgerät und eine Deichselvorrichtung und eine Zugfahrzeug-Arbeitsgerät-Kombination vorzuschlagen, welche die aus dem Stand der Technik bekannten Nachteile vermeiden. Insbesondere ein landwirtschaftliches Arbeitsgerät und eine Zugfahrzeug-Arbeitsgerät-Kombination vorzuschlagen, die derart ausgestaltet sind, dass diese eine bessere Verstellbarkeit und/oder Einstellbarkeit bzgl. der Höhe aufweisen und/oder einer Belastung mit höheren Drehmomenten und/oder Kräften standhalten.

Diese Aufgabe wird durch ein landwirtschaftliches Arbeitsgerät mit den Merkmalen des Anspruchs 1 und einer Zugfahrzeug-Arbeitsgerät-Kombination mit den Merkmalen des Anspruchs 9 gelöst.

Die abhängigen Ansprüche beziehen sich auf besonders vorteilhafte Ausführungsformen der Erfindung.

Erfindungsgemäß wird ein landwirtschaftliches Arbeitsgerät mit einer Deichselvorrichtung zum Ziehen des Arbeitsgeräts mit einem Zugfahrzeug vorgeschlagen. Das Arbeitsgerät umfasst ein Bodeneingriffsmittel zur Abstützung auf dem Erdboden. Im Weiteren ist die Deichselvorrichtung an einem der Deichselvorrichtung nachlaufenden Arbeitsgeräteteil des landwirtschaftlichen Arbeitsgeräts um eine zu einer Querachse, insbesondere zu einer horizontalen Querachse, des Arbeitsgeräts parallele erste Schwenkachse schwenkbar gelagert. Ausserdem sind der nachlaufende Arbeitsgeräteteil und die Deichselvorrichtung mittels mindestens einen ersten Aktuator gekoppelt und die Deichselvorrichtung ist mittels des ersten Aktuators derart um die erste Schwenkachse schwenkbar, dass ein Kippwinkel zwischen der Deichselvorrichtung, insbesondere der Deichsel, und dem nachlaufenden Arbeitsgeräteteil verstellbar, insbesondere einstellbar und/oder feststellbar ist.

Das landwirtschaftliche Arbeitsgerät kann ein Sammelfahrzeug für Erntegut, beispielsweise eine Ballenpresse für rechteckige oder runde Ballen, bevorzugt eine Rundballenpresse oder ein Ladewagen, insbesondere mit einer Aufnahmeeinrichtung, oder ein Mähwerk oder eine Heuwerbungsmaschine oder ein Wender oder ein Schwader sein. Die Bodeneingriffsmittel können entweder Räder oder Raupenketten sein und mit dem nachlaufenden Arbeitsgeräteteil, insbesondere mittels einer Geräteachse mit einem Rahmen oder einem Fahrgestell des nachlaufenden Arbeitsgeräteteils gekoppelt sein. Im Speziellen kann das landwirtschaftliche Arbeitsgerät durch Räder auf dem Erdboden abgestützt sein. Das Arbeitsgerät, insbesondere der nachlaufende Arbeitsgeräteteil, kann ein mit einem Feld zusammenwirkendes Bearbeitungselement umfassen. Das Bearbeitungselement kann insbesondere ein Gutaufnehmer sein, der zum Aufnehmen eines Schwads vom Erdboden dient. Das Arbeitsgerät, insbesondere der nachlaufende Arbeitsgeräteteil, kann weiterhin einen Behälter zur Aufnahme des aufgenommenen Erntegutes insbesondere in Form einer Presskammer oder eines Ladebehälters umfassen. Die Deichselvorrichtung umfasst die Deichsel, die insbesondere eine langestreckte Deichsel sein kann. Die Deichselvorrichtung kann ausserdem das Deichseljoch umfassen. Die Deichsel kann an einem anderen Ende eine Anschlusseinrichtung, beispielsweise eine Zugöse, zum Koppeln der Deichselvorrichtung an das Zugfahrzeug aufweisen, sodass das Arbeitsgerät mittels der Deichselvorrichtung mit dem Zugfahrzeug koppelbar ist. Dazu kann beispielsweise ein Kupplungsteil, beispielsweise eine Kupplung oder ein Kupplungsjoch oder zur Anordnung am Zugfahrzeug vorgesehen sein. Dadurch können das Kupplungsteil und die Anschlusseinrichtung an einem Kuppelpunkt des Kupplungsteils und/oder an einem vom Kuppelpunkt beabstandeten Anlenkpunkt miteinander koppelbar sein. Das Deichseljoch kann als jochförmiges Bauteil ausgebildet sein. Das Deichseljoch kann insbesondere am Rahmen des Arbeitsgeräts schwenkbar gelagert sein. Das Deichseljoch kann zwischen der Deichsel und dem nachlaufenden Arbeitsgeräteteil angeordnet sein. Die Deichselvorrichtung, insbesondere die Deichsel, kann mittels eines ersten Schwenklagers am nachlaufenden Arbeitsgeräteteil um die erste Schwenkachse schwenkbar gelagert sein. Gemäß Anspruch 1 ist das Deichseljoch mittels eines ersten Schwenklagers am nachlaufenden Arbeitsgeräteteil um die erste Schwenkachse schwenkbar gelagert.

Die erste Schwenkachse kann mit einer Arbeitsgerätehochachse, also der Hochachse des Arbeitsgeräts, insbesondere der Hochmittelachse des Arbeitsgeräts, und/oder einer Längsachse des Arbeitsgeräts, insbesondere der Längsmittelachse des Arbeitsgeräts, und/oder der Längsachse der Deichsel, insbesondere der Längsmittelachse der Deichsel, einen Winkel von 75 Grad bis 105 Grad, bevorzugt von 85 Grad bis 95 Grad, im Speziellen von 90 Grad einschliessen. Die erste Schwenkachse kann im Speziellen eine zur Längsachse und/oder Hochachse des Arbeitsgeräts oder zur Längsachse der Deichsel orthogonale Achse sein. Die erste Schwenkachse kann eine horizontale oder horizontal verlaufende Achse sein. Die erste Schwenkachse kann parallel oder räumlich zusammenfallend, also insbesondere koaxial, zu einer horizontalen Querachse des Arbeitsgeräts sein. Die horizontale Querachse kann orthogonal zur Längsachse des Arbeitsgeräts und orthogonal zur Arbeitsgerätehochachse sein.

Der Kippwinkel kann, unabhängig davon, ob die Deichselvorrichtung mit oder ohne Deichseljoch ausgebildet ist, ein Winkel zwischen der Deichselvorrichtung, insbesondere der Deichsel, und dem nachlaufenden Arbeitsgeräteteil sein. Der Kippwinkel kann ein von einer Längsachse der Deichsel, insbesondere der Längsmittelachse der Deichsel, und der Arbeitsgerätehochachse eingeschlossener Winkel sein, bevorzugt in einer Ebene, die von der Längsachse der Deichsel und der Arbeitsgerätehochachse aufgespannt wird, besonders bevorzugt in einer vertikalen Ebene, die von der Längsachse der Deichsel und der Arbeitsgerätehochachse aufgespannt wird. Die Arbeitsgerätehochachse kann eine zur Längsachse des Arbeitsgeräts vertikalen Achse sein. Der Kippwinkel kann 20 Grad bis 160 Grad betragen, bevorzugt 40 Grad bis 130 Grad, besonders bevorzugt 60 Grad bis 120 Grad.

Mit anderen Worten, der erste Aktuator kann derart am nachlaufenden Arbeitsgeräteteil und der Deichselvorrichtung, insbesondere der Deichsel oder dem Deichseljoch, angelenkt, insbesondere gekoppelt und/oder befestigt sein, dass durch Betätigen des ersten Aktuators der Kippwinkel verstellbar, insbesondere auch einstellbar und/oder feststellbar ist. Die Deichselvorrichtung, insbesondere das Deichseljoch, kann mittels eines oder zwei oder mehrerer erster Schwenklager am nachlaufenden Arbeitsgeräteteil um die erste Schwenkachse schwenkbar gelagert sein. Es können mindestens einer, bevorzugt zwei, drei, vier oder mehr, erste Aktuatoren vorgesehen sein. Der erste Aktuator kann bevorzugt als Hydraulikzylinder ausgebildet sein. Es ist jedoch auch denkbar eine andere, beispielsweise elektrische, mechanische oder pneumatische Betätigungsart, insbesondere eines Zylinders zu wählen. So kann der erste Aktuator auch als Elektromotor, beispielsweise Spindelmotor, ausgebildet sein. Auch eine entsprechende Anordnung mit einem Seilzug ist denkbar, um die Betätigung rein mechanisch zu gestalten.

Wesentlich für die Erfindung ist, dass eine Einstellung der Kippwinkels ermöglicht wird. Dadurch kann vorteilhafterweise eine Höhe der Deichselvorrichtung oder des nachlaufenden Arbeitsgeräteteils in Bezug auf den Boden verstellt, bevorzugt eingestellt und/oder festgestellt werden, insbesondere die Höhe der Deichselvorrichtung automatisch eingestellt werden, sodass es einfacher ist die Anschlusseinrichtung mit einem Zugfahrzeug zu verbinden. Von Vorteil kann dadurch ausserdem die Höhe des Arbeitsgeräts, bevorzugt des Bearbeitungselements, besonders bevorzugt des Gutaufnehmers, in Bezug auf den Boden einstellbar sein. Beispielsweise kann dadurch eine Höhe des Bearbeitungselements eingestellt werden, um die Ernte zu optimieren (untere Position), aber auch die Bodenfreiheit erhöht werden, z.B. beim Überqueren der Schwaden oder Betreten eines Feldes, Vorbeifahren an einer Schüssel etc.. Somit kann die Höhe des Arbeitsgeräts auf einfache Art und Weise angepasst werden. Darüber hinaus können durch diese Massnahme unterschiedliche vertikale Versätze des Arbeitsgeräts, insbesondere der Deichselvorrichtung und des nachlaufenden Arbeitsgeräteteils zueinander, eingestellt werden.

In Ausgestaltung der Erfindung umfasst die Deichselvorrichtung eine Deichsel und der nachlaufende Arbeitsgeräteteil und die Deichsel sind mittels des ersten Aktuators gekoppelt. Die Deichselvorrichtung umfasst gemäß Anspruch 1 eine Deichsel und ein Deichseljoch, wobei die Deichsel an das Deichseljoch gekoppelt ist, und der nachlaufende Arbeitsgeräteteil und das Deichseljoch mittels des ersten Aktuators gekoppelt sind. Die Deichsel oder das Deichseljoch sind mittels des ersten Schwenklagers am nachlaufenden Arbeitsgeräteteil um die erste Schwenkachse schwenkbar gelagert.

Diese Massnahme weist die Vorteile des erfindungsgemässen Arbeitsgeräts auf.

In Ausgestaltung der Erfindung ist die Deichsel an einem Ende mittels eines zweiten Schwenklagers an einem der Deichselvorrichtung nachlaufenden Arbeitsgeräteteil oder am Deichseljoch um eine erste Hochachse schwenkbar gelagert ist und/oder die Deichselvorrichtung umfasst einen Deichselarm, der sich aus der Deichsel erstreckt. Der Deichselarm ist an einem Deichselarmende mittels eines dritten Schwenklagers am nachlaufenden Arbeitsgeräteteil oder dem Deichseljoch um eine zweite Hochachse schwenkbar gelagert. Die erste und/oder zweite Hochachse können mit der Längsachse des Arbeitsgeräts, insbesondere der Längsmittelachse des Arbeitsgeräts, und/oder der Längsachse der Deichsel, insbesondere der Längsmittelachse der Deichsel, einen Winkel von 75 bis 105 Grad, bevorzugt von 85 Grad bis 95 Grad, besonders bevorzugt von 90 Grad einschliessen. Die erste und/oder zweite Hochachse können eine zur Längsachse des Arbeitsgeräts oder zur Längsachse der Deichsel vertikale oder vertikal verlaufende, insbesondere auch orthogonale, Achse sein. Der Deichselarm kann als Teil der Deichsel oder aber als ein von der Deichsel separates mit der Deichsel verbindbares oder mit der Deichsel verbindbares Bauteil ausgebildet sein. Der Deichselarm kann beabstandet und/oder parallel zur Deichsel sein und/oder sich in Richtung des zweiten Schwenklagers erstrecken, insbesondere sich parallel zur Deichsel in Richtung des zweiten Schwenklagers erstrecken. Das Deichseljoch kann schwenkbar am Arbeitsgerät, insbesondere am Rahmen des Arbeitsgeräts, gelagert sein. Vorteilhafterweise verteilen sich so die auf das Arbeitsgerät, insbesondere auf die Deichselvorrichtung, einwirkenden Drehmomente und/oder Kräfte des nachlaufenden Arbeitsgeräteteils und/oder des Zugfahrzeugs, insbesondere über die Deichsel und den Deichselarm und/oder das zweite und dritte Schwenklager. Das landwirtschaftliche Arbeitsgerät mit der Deichselvorrichtung weist also den Vorteil auf, dass die Stabilität der Kopplung der Deichselvorrichtung an den nachlaufenden Arbeitsgeräteteil erhöht und die Kräfteverteilung optimiert wird. Dadurch sind das Arbeitsgerät, insbesondere die Verbindung des nachlaufenden Arbeitsgeräteteils mit der Deichselvorrichtung, und/oder die Kopplung des Arbeitsgeräts an das Zugfahrzeug, weniger störanfällig und/oder konstruktiv stabiler ausgebildet. Darüber hinaus wird vorteilhafterweise auch Zwängung des Arbeitsgeräts, insbesondere einzelner Bauteil und/oder der Deichselvorrichtung, vermieden, insbesondere eine statische Überbestimmtheit bzw. Unbestimmtheit vermieden. Von Vorteil kann ausserdem das Einstellen des Kippwinkels mit dem Einstellen des Schwenkwinkels kombiniert werden.

Das Arbeitsgerät kann ausserdem eine Antriebskomponente umfassen und die Antriebskomponente zwischen dem ersten und zweiten Schwenklager angeordnet sein. Die Antriebskomponente kann dabei durch den Deichselarm geführt und/oder im Deichselarm gelagert sein. Die Antriebskomponente kann eine Welle sein, mit der eine Zapfwelle des Zugfahrzeugs mit einer Antriebswelle des Arbeitsgeräts verbindbar und antreibbar ist. Die Antriebskomponente kann zwei- oder mehrstückig ausgebildet sein, bevorzugt ein erstes und zweites Antriebskomponententeil umfassen, besonders bevorzugt ein erstes und zweites Wellenteil umfassen. Das erste und zweite Antriebskomponententeil können mittels eines Universalgelenks miteinander verbunden sein. Das Universalgelenk kann im Deichselarm gelagert sein. Das erste Antriebskomponententeil kann mit der Zapfwelle des Zugfahrzeugs und dem Universalgelenk koppelbar sein und das zweite Antriebskomponententeil kann mit dem Universalgelenk und der Antriebswelle des Arbeitsgeräts koppelbar sein.

Das zweite Antriebskomponententeil kann zwischen dem ersten und zweiten Schwenklager, besonders bevorzugt unter dem ersten Schwenklager und über dem zweiten Schwenklager angeordnet sein. Vorteilhafterweise werden so auch die auf die Antriebskomponente einwirkenden Drehmomente und/oder Kräfte des Arbeitsgeräts und/oder des Zugfahrzeugs besser verteilt, sodass die Antriebskomponente weniger störanfällig ist und/oder die Anordnung der Antriebskomponente konstruktiv stabiler ausgebildet ist. Darüber hinaus wird vorteilhafterweise auch Zwängung und/oder eine statische Überbestimmtheit bzw. Unbestimmtheit der Antriebskomponente vermieden.

Der Deichselarm kann eine Spanneinrichtung umfassen. Die Spanneinrichtung kann an einem Ende der Spanneinrichtung das zweite Schwenklager und/oder an einem anderen Ende der Spanneinrichtung ein drittes Schwenklager umfassen, mit welchem die Spanneinrichtung schwenkbar am Deichselarm gelagert ist. Das zweite und/oder dritte Schwenklager können mit der Spanneinrichtung gekoppelt oder an dieser befestigt oder mit der Spanneinrichtung einstückig ausgebildet sein. Die Spanneinrichtung kann eine längenverstellbare Spanneinrichtung sein. Die Spanneinrichtung kann also derart ausgestaltet sein, dass zwischen dem zweiten und dritten Schwenklager eine Lagefixierung und/oder eine Hin- und Herbewegung und/oder eine Streckung und/oder eine koaxiale Bewegung, insbesondere entlang der Längsachse der Spanneinrichtung ermöglicht wird. Das zweite und/oder dritte Schwenklager können Kugellager sein. Das dritte Schwenklager kann um eine dritte Hochachse schwenkbar sein. Die dritte Hochachse kann parallel zur ersten und zweiten Hochachse sein. Die erste, zweite und dritte Hochachse können in einer Ebene angeordnet sein. Vorteilhafterweise werden so die auf die Spannvorrichtung und die zweite und/oder dritte Schwenklager einwirkenden Drehmomente und/oder Kräfte besser auf das Arbeitsgerät, insbesondere die Deichselvorrichtung verteilt, sodass das Arbeitsgerät, insbesondere die Deichselvorrichtung, weniger störanfällig ist.

In Ausgestaltung der Erfindung, sind die erste und zweite Hochachse parallel zueinander angeordnet sind oder die erste und zweite Hochachse sind räumlich zusammenfallend, insbesondere koaxial zueinander angeordnet, und bilden eine gemeinsame Hochachse und das zweite und dritte Schwenklager sind entlang der gemeinsamen Hochachse zueinander beabstandet angeordnet. Das erste und zweite Schwenklager können also, insbesondere in einem im Arbeitsgerät verbauten Zustand, entlang der gemeinsamen Hochachse zueinander koaxial angeordnet sein. Die gemeinsame Hochachse kann mit der Längsachse des Arbeitsgeräts, insbesondere der Längsmittelachse des Arbeitsgeräts, und/oder der Längsachse der Deichsel, insbesondere der Längsmittelachse der Deichsel, einen Winkel von 75 bis 105 Grad, bevorzugt einen Winkel von 85 Grad bis 95 Grad, im Speziellen einen Winkel von 90 Grad, einschliessen. Die gemeinsame Hochachse kann eine zur Längsachse des Arbeitsgeräts oder zur Längsachse der Deichsel vertikal verlaufende, insbesondere orthogonale, gemeinsame Hochachse sein. Die Massnahme, bevorzugt die Anordnung des ersten und zweiten Schwenklagers entlang der gemeinsamen Hochachse und die Anordnung des ersten und zweiten Schwenklagers entlang der gemeinsamen Hochachse, hat den Vorteil einer besseren Verteilung der Kräfte und/oder Drehmomente, insbesondere der Vermeidung einer Zwängung und/oder statischen Überbestimmtheit. Es kann also eine konstruktiv einfache und gleichzeitig stabilere Kopplung des nachlaufenden Arbeitsgeräteteils mit Deichselvorrichtung ausgebildet werden, wobei weiterhin eine optimale Schwenkbarkeit des nachlaufenden Arbeitsgeräteteils gegenüber der Deichselvorrichtung gewährleistet wird.

In Ausgestaltung der Erfindung sind der nachlaufende Arbeitsgeräteteil und die Deichsel oder das Deichseljoch und die Deichsel mittels mindestens einen zweiten Aktuator gekoppelt. Dabei sind die Deichsel und/oder der nachlaufende Arbeitsgeräteteil oder die Deichsel und/oder das Deichseljoch mittels des zweiten Aktuators derart um die erste und zweite Hochachse oder die gemeinsame Hochachse schwenkbar, dass ein Schwenkwinkel zwischen der Deichsel und dem nachlaufenden Arbeitsgeräteteil verstellbar, insbesondere einstellbar und feststellbar ist. Der zweite Aktuator kann bevorzugt als Hydraulikzylinder ausgebildet sein. Es ist jedoch auch denkbar eine andere, beispielsweise elektrische, mechanische oder pneumatische Betätigungsart, insbesondere eines Zylinders zu wählen. So kann der zweite Aktuator auch als Elektromotor, beispielsweise Spindelmotor, ausgebildet sein. Auch eine entsprechende Anordnung mit einem Seilzug ist denkbar, um die Betätigung rein mechanisch zu gestalten. Der Schwenkwinkel kann, unabhängig davon, ob die Deichselvorrichtung mit oder ohne das Deichseljoch ausgebildet ist, ein Winkel sein, der zwischen der Deichsel und dem nachlaufenden Arbeitsgeräteteil eingeschlossen ist. Der Schwenkwinkel kann als zwischen einer Längsachse der Deichsel, insbesondere einer Längsmittelachse der Deichsel, und der Längsachse des Arbeitsgeräts, insbesondere einer Längsmittelachse des Arbeitsgeräts eingeschlossener Winkel gemessen werden. Der Schwenkwinkel kann bevorzugt in einer Ebene liegen, die von den beiden Längsachsen oder Längsmittelachsen aufgespannt wird, besonders bevorzugt in einer horizontalen Ebene liegen, die von den beiden Längsachsen aufgespannt wird. Der Schwenkwinkel kann 0 Grad bis 170 Grad in beide Schwenkrichtungen, bevorzugt 0 Grad bis 150 Grad, besonders bevorzugt 0 Grad bis 130 Grad, im Speziellen bei der Geradeausfahrt des Arbeitsgeräts 0 Grad betragen. Mit anderen Worten, der zweite Aktuator kann derart am nachlaufenden Arbeitsgeräteteil und der Deichsel oder dem Deichseljoch und der Deichsel angelenkt sein, insbesondere gekoppelt und/oder befestigt sein, dass durch Betätigen des zweiten Aktuators der Schwenkwinkel verstellbar, insbesondere auch einstellbar und/oder feststellbar ist. Im Speziellen kann der Schwenkwinkel anstatt zwischen der Deichsel und dem nachlaufenden Arbeitsgeräteteil, zwischen der Deichsel und dem Deichseljoch verstellbar sein. Ein wesentlicher Vorteil dieser Massnahme ist, dass der Schwenkwinkel mittels des zweiten Aktuators verstellt werden kann und damit unterschiedliche seitliche Versatze des Arbeitsgeräts, insbesondere des Deichseljochs und somit indirekt des nachlaufenden Arbeitsgeräteteils oder direkt des nachlaufenden Arbeitsgeräteteils, in Bezug auf die Deichselvorrichtung und/oder das Zugfahrzeug verstellt werden können. Ausserdem kann das Arbeitsgerät vorteilhafterweise an verschiedene Zugfahrzeuge mit unterschiedlichen Spurweiten und unterschiedlich breiten Reifen angepasst werden kann. Darüber hinaus kann durch diese Massnahme vorteilhafterweise das Einstellen des Kippwinkels mit dem Einstellen des Schwenkwinkels kombiniert werden.

In Ausgestaltung der Erfindung weist die Deichselvorrichtung, insbesondere das Deichseljoch, eine Halteklammer auf, wobei die Halteklammer teilweise durch eine Ausnehmung im Deichseljoch geführt ist und derart am Deichseljoch angeordnet ist, dass die Deichsel mittels der Halteklammer und des zweiten und/oder dritten Schwenklagers am Deichseljoch um die erste und/oder zweite Hochachse oder gemeinsame Hochachse schwenkbar gelagert ist. Die Halteklammer und die Deichsel können ausserdem mittels des zweiten Aktuators gekoppelt sein. Im Weiteren kann der erste Aktuator am nachlaufenden Arbeitsgeräteteil, insbesondere am Rahmen des Arbeitsgeräts, und am Deichseljoch und/oder der Halteklammer, insbesondere um eine zur ersten Schwenkachse parallele zweite Schwenkachse am Deichseljoch und/oder der Halteklammer, schwenkbar gelagert sein. Die Halteklammer unterstützt vorteilhafterweise eine bessere Verteilung der angreifenden Drehmoment und/oder Kräfte und entlastet somit das zweite und dritte Schwenklager.

In Ausgestaltung der Erfindung können das erste und/oder zweite und/oder dritte und/oder vierte und/oder fünftes Schwenklager ein Drehlager oder ein Kugellager oder ein Kippbolzen sein.

In Ausgestaltung der Erfindung weist das Arbeitsgerät eine Steuereinheit auf, die mit dem ersten Aktuator verbunden ist, und die Steuereinheit betreibbar ist, den ersten Aktuator in einer Weise anzusteuern, dass der Kippwinkel verstellbar, insbesondere einstellbar und/oder feststellbar ist, und/oder die Steuereinheit mit dem zweiten Aktuator verbunden ist, und die Steuereinheit betreibbar ist, den zweiten Aktuator in einer Weise anzusteuern, dass der Schwenkwinkel verstellbar, insbesondere einstellbar und/oder feststellbar ist. Die Steuereinheit kann sich aber auch an Bord des Zugfahrzeugs befinden oder kann räumlich über das Zugfahrzeug und das Arbeitsgerät verteilt sein. Die Steuereinheit kann mit dem ersten Aktuator verbunden, insbesondere signalverbunden, sein, der zur Verstellung des Kippwinkels dient. Außerdem kann die Steuereinheit mit dem zweiten Aktuator verbunden, insbesondere signalverbunden, sein, der zur Verstellung des Schwenkwinkels dient. Die Steuereinheit kann also derart ausgestaltet und eingerichtet sein, dass mit dem ersten und/oder zweiten Aktuator das Arbeitsgerät, insbesondere die Deichselvorrichtung und/oder der nachlaufende Arbeitsgeräteteil bzw. die Deichsel und das Deichseljoch, verstellbar, insbesondere auch gegeneinander verschwenkbar sind, derart, dass der Schwenkwinkel und/oder Kippwinkel ermittelbar und/oder speicherbar und/oder ausgebbar und/oder einstellbar und/oder verstellbar ist. Es kann auch ein Verfahren zum Verstellen, insbesondere Einstellen und/oder Feststellen des Schwenkwinkels und/oder Kippwinkels mit der Steuereinheit durchführbar sein. Ausserdem kann die Steuereinheit im Betrieb den ersten und/oder zweiten Aktuator derart ansteuern, dass beispielsweise die Längsachse des Bearbeitungselements stets zumindest näherungsweise orthogonal zu einer Solllinie orientiert ist, was beispielsweise bei einem mit einem Schwad zusammenwirkenden Bearbeitungselement den Verschleiß vermindert. Im Speziellen können einer oder mehrere Sensoren am Arbeitsgerät vorgesehen sein, insbesondere im Behälter oder am Bearbeitungselement. Der oder die Sensoren können über die Breite des Behälters und/oder des Bearbeitungselements verteilt sein. Der oder die Sensoren können eine Verteilung, insbesondere eine seitliche Verteilung, des Ernteguts erfassen, um eine Verteilung eines Ernteguts im Behälter und/oder eine Verteilung eines Schwads, insbesondere einen Querschnitt oder ein Volumen des Schwads, am Bearbeitungselement zu detektieren. Der oder die Sensoren können mit der Steuereinheit verbunden sein. Das oder die Signale des oder der Sensoren kann der Steuereinheit als weiterer Parameter zur Ansteuerung des ersten und/oder zweiten Aktuators dienen. Die Steuereinheit kann durch eine Positionsbestimmungseinrichtung und/oder eine Erfassungseinrichtung mit einer Information hinsichtlich der Lage der Solllinie beaufschlagt werden. Vorteilhafterweise kann durch eine derartige Steuereinheit, die während des Fahrens des Arbeitsgeräts den Schwenkwinkel und/oder Kippwinkel ändert, insbesondere periodisch oder schrittweise ändert, erreicht werden, dass das in der Arbeitsstellung seitlich außerhalb der Spur des Zugfahrzeugs versetzte Arbeitsgerät eine in horizontaler Richtung pendelnde Fahrt ausführt, ohne dass das Zugfahrzeug seine Fahrtrichtung ändern muss, und/oder die vertikale Ausrichtung, insbesondere eine Arbeitshöhe, des Arbeitsgerät während der Fahrt geändert werden kann. Beispielsweise kann sich also eine Ballenpresse oder ein Ladewagen vor dem aufzunehmenden Schwad seitlich hinter dem geradeaus neben dem Schwad fahrenden Zugfahrzeug durch das Gelände schlängelt, sodass das Bearbeitungselement oder die Aufnahmeeinrichtung den vergleichsweise schmalen Schwad im Laufe des Aufnahmevorgangs an sämtlichen Stellen ihrer Arbeitsbreite und/oder in einer optimalen Arbeitshöhe erfasst, ohne dass das Zugfahrzeug seine Fahrtrichtung ändern muss. Diese Massnahme beinhaltet gleichzeitig den Vorteil, dass das gleiche Arbeitsgerät mit geringstem Verstellaufwand an verschiedene Zugfahrzeuge angepasst werden kann.

Offenbart aber nicht beansprucht ist eine Deichselvorrichtung nach mindestens einem der Ansprüche 1 bis 8 für ein landwirtschaftliches Arbeitsgerät zum Koppeln, insbesondere Anhängen, des Arbeitsgeräts an ein Zugfahrzeug. Die Deichselvorrichtung kann zumindest eine Deichsel, einen ersten Aktuator und ein erstes Schwenklager umfassen. Die Deichselvorrichtung kann ausserdem einen Deichselarm und ein Deichseljoch umfassen. Die Deichsel oder das Deichseljoch kann an einem Ende mittels des ersten Schwenklagers an einem der Deichselvorrichtung nachlaufenden Arbeitsgeräteteil um eine erste Schwenkachse schwenkbar lagerbar bzw. gelagert sein. Die Deichselvorrichtung kann ein zweites Schwenklager umfassen, mit welchem die Deichsel am Deichseljoch um eine erste Hochachse schwenkbar gelagert sein kann. Die Deichselvorrichtung kann weiter den Deichselarm umfassen, der sich aus der Deichsel erstreckt, wobei der Deichselarm an einem Deichselarmende mittels eines dritten Schwenklagers am nachlaufenden Arbeitsgeräteteil um eine zweite Hochachse schwenkbar lagerbar sein kann. Die erfindungsgemässe Deichselvorrichtung weist die oben beschriebenen Vorteile des erfindungsgemässen Arbeitsgeräts auf.

Die Erfindung betrifft ausserdem eine Zugfahrzeug-Arbeitsgerät-Kombination mit einem Zugfahrzeug und einem erfindungsgemässen Arbeitsgerät, insbesondere einem Arbeitsgerät nach einem der Ansprüche 1 bis 8.

Die Zugfahrzeug-Arbeitsgerät-Kombination kann eine Kombination aus einem Zugfahrzeug und einem vom Zugfahrzeug gezogenen Arbeitsgerät sein. Das Arbeitsgerät kann mittels der Deichselvorrichtung an das Zugfahrzeug koppelbar bzw. gekoppelt, insbesondere anhängbar bzw. angehängt sein. Das Zugfahrzeug kann zum Ziehen und/oder Schieben des Arbeitsgeräts eingesetzt werden, insbesondere in der Landwirtschaft. Das Zugfahrzeug kann eine landwirtschaftliche Zugmaschine, im Speziellen ein Traktor oder Schlepper oder dergleichen sein. Das Zugfahrzeug kann zwei-, drei- oder vierrädrig oder mehrrädrig sein und/oder eine Gleiskette aufweisen. Das Zugfahrzeug kann eine Fahrerkabine, einen Motor und ein Getriebe umfassen. Die erfindungsgemässe Zugfahrzeug-Arbeitsgerät-Kombination weist die oben beschriebenen Vorteile des erfindungsgemässen Arbeitsgeräts auf.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1a-1b: schematische Darstellungen eines ersten und zweiten Ausführungsbeispiels des erfindungsgemässen Arbeitsgeräts mit einem ersten und zweiten Ausführungsbeispiel einer erfindungsgemässen Deichselvorrichtung, und
- Fig. 2: eine schematische Darstellung eines dritten Ausführungsbeispiels des erfindungsgemässen Arbeitsgeräts mit einem dritten Ausführungsbeispiel einer erfindungsgemässen Deichselvorrichtung, und
- Fig. 3: eine schematische Seitenansicht eines ersten Ausführungsbeispiels einer erfindungsgemässe Zugfahrzeug-Arbeitsgerät-Kombination, und
- Fig. 4: eine schematische Darstellung eines vierten Ausführungsbeispiels des erfindungsgemässen Arbeitsgeräts mit einem vierten Ausführungsbeispiel einer erfindungsgemässen Deichselvorrichtung, und
- Fig. 5a-5c: drei schematische Darstellungen mit einem fünften bis siebten Ausführungsbeispiel der erfindungsgemässen Deichselvorrichtung, und
- Fig. 6a-6b: zwei schematische Darstellungen mit einem fünften und sechsten Ausführungsbeispiel des erfindungsgemässen Arbeitsgeräts.

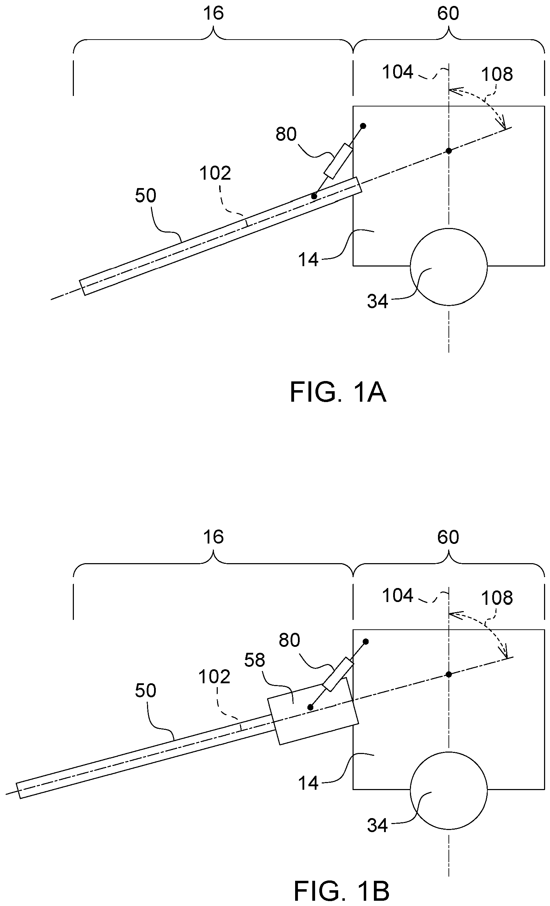

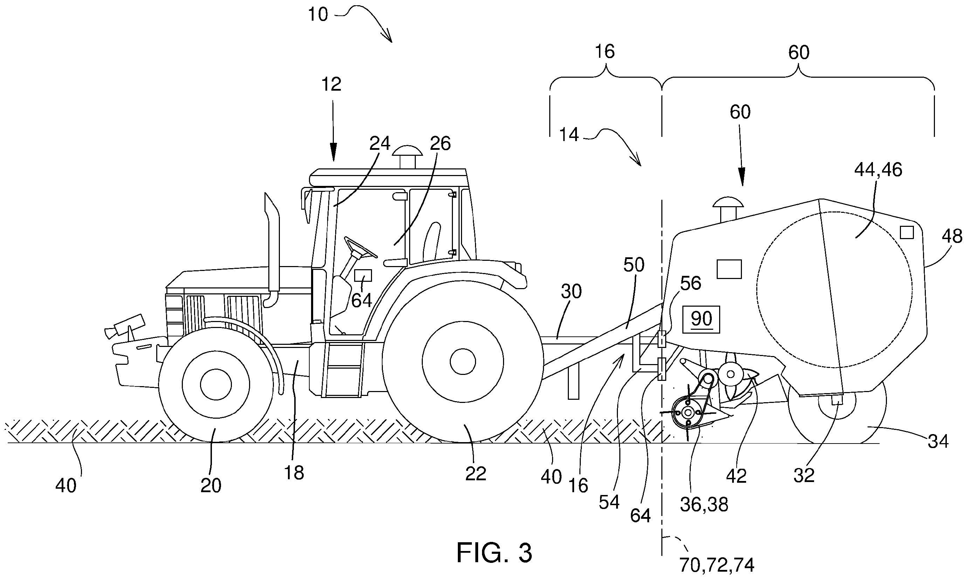

Die Figuren 1a und 1b zeigen schematische Darstellungen eines ersten und zweiten Ausführungsbeispiels des erfindungsgemässen Arbeitsgeräts 14 mit einem ersten und zweiten Ausführungsbeispiel einer erfindungsgemässen Deichselvorrichtung 16. Das Arbeitsgerät 14, hier in Form einer Rundballenpresse, umfasst ein Fahrgestell oder Rahmen (Bezugszeichen 32, siehe Figur 3), das sich über Bodeneingriffsmittel, hier Räder 34, auf dem Erdboden abstützt. Der Ballenpressraum (Bezugszeichen 44, siehe Figur 3) wird in an sich bekannter Weise durch Pressmittel (nicht gezeigt) begrenzt. Die Rundballenpresse kann eine größenunveränderliche Ballenpresskammer umfassen. Hierbei kann das Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfklappe auf einem Kreisbogen liegen und wenigstens eine der Pressrollen kann angetrieben sein. Die Anordnung der Pressrollen im Ballenpressraum kann einer Zylinderform entsprechen, sodass die Pressrollen zylindrisch um den Rundballen angeordnet sind und eine zylindrische Umfangsfläche ausbilden. Alternativ kann die Rundballenpresse auch mit einer größenveränderlichen Ballenpresskammer bzw. als Rundballenpresse mit variabler Ballenpresskammer ausgebildet sein, wobei die Pressmittel dann als Riemen, Gurte oder Kettenanordnungen ausgebildet sein können.

Das Arbeitsgerät 14 umfasst die Deichselvorrichtung 16. Die Deichselvorrichtung wiederum umfasst eine langgestreckte Deichsel 50, die an ein Zugfahrzeug (Bezugszeichen 12, siehe Figur 3) und das Arbeitsgerät 14 gekoppelt oder koppelbar ist.

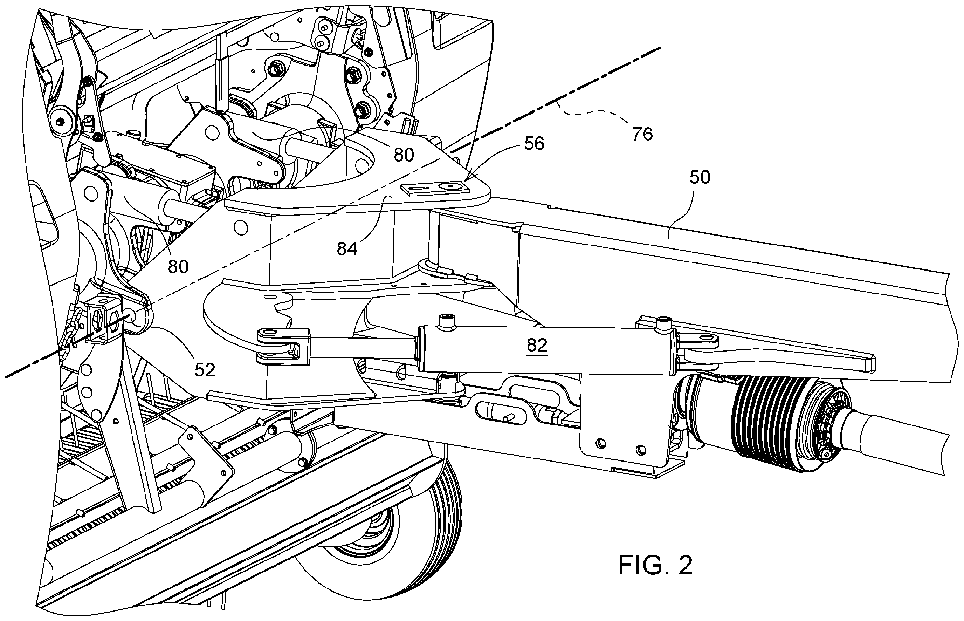

Die Deichselvorrichtung 16 kann, wie in Figur 1a gezeigt ist, so ausgestaltet sein, dass die Deichsel 50 an einem Ende mittels eines ersten Schwenklagers (Bezugszeichen 52, siehe Figur 2) an einem der Deichselvorrichtung 16 nachlaufenden Arbeitsgeräteteil 60, insbesondere den Rahmen 32 des Arbeitsgeräts 12, um eine zu einer horizontalen Querachse des Arbeitsgeräts 14 parallele erste Schwenkachse (Bezugszeichen 76, siehe Figur 2) schwenkbar gelagert ist. Die Deichselvorrichtung 16 kann aber auch wie in Figur 1b gezeigt, so ausgestaltet sein, dass das Deichseljoch 58 an einem Ende mittels eines ersten Schwenklagers (Bezugszeichen 52, siehe Figur 2) an einem der Deichselvorrichtung 16 nachlaufenden Arbeitsgeräteteil 60, insbesondere den Rahmen 32 des Arbeitsgeräts 12, um eine zu einer horizontalen Querachse des Arbeitsgeräts 14 parallele erste Schwenkachse (Bezugszeichen 76, siehe Figur 2) schwenkbar gelagert ist.

Der nachlaufende Arbeitsgeräteteil 60 und die Deichsel 50 (siehe Figur 1a) oder das Deichseljoch 58 (siehe Figur 1b) sind mittels eines ersten Aktuators 80 gekoppelt. Dadurch ist der nachlaufende Arbeitsgeräteteil 60 mittels des ersten Aktuators 80 derart um die erste Schwenkachse 76 schwenkbar, dass der Kippwinkel 108 zwischen der Deichselvorrichtung 16 und dem nachlaufenden Arbeitsgeräteteil 60 einstellbar ist. Darüber hinaus kann eine Steuereinheit (Bezugszeichen 90, siehe Figur 3) mit dem ersten Aktuator 80 verbunden sein, und die Steuereinheit 90 ist betreibbar, den zweiten Aktuator 82 in einer Weise anzusteuern, dass der Kippwinkel 108 einstellbar ist. Wie den Figuren 1a und 1b zu entnehmen ist, entspricht der Kippwinkel 108 einem Winkel der von einer Längsachse der Deichsel 102 und einer Arbeitsgerätehochachse 104 eingeschlossen ist.

Figur 2 zeigt eine schematische Darstellung eines dritten Ausführungsbeispiels des erfindungsgemässen Arbeitsgeräts 14 mit einem dritten Ausführungsbeispiel einer erfindungsgemässen Deichselvorrichtung 16. Die in Figur 2 gezeigte Darstellung entspricht im Wesentlichen den in den Figuren 1a und 1b gezeigten Arbeitsgeräten 14 bzw. Deichselvorrichtungen 16, sodass im Folgenden lediglich auf die Unterschiede eingegangen wird. Das Deichseljoch 58 ist am nachlaufenden Arbeitsgeräteteil 60 um die erste Schwenkachse 76 schwenkbar gelagert. Der nachlaufende Arbeitsgeräteteil 60 und das Deichseljoch 14 sind mittels zweier ersten Aktuatoren 80 gekoppelt. Dadurch ist das Deichseljoch 58 und somit die Deichselvorrichtung 16 mittels der ersten Aktuatoren 80 derart um die erste Schwenkachse 76 schwenkbar, dass der Kippwinkel 108 zwischen der Deichselvorrichtung 16 und dem nachlaufenden Arbeitsgeräteteil 60 einstellbar ist. Das Deichseljoch 58 ist mittels der ersten Schwenklagers 52, das als zwei Kippbolzen ausgebildet ist, am nachlaufenden Arbeitsgeräteteil 60 um die erste Schwenkachse 76 schwenkbar gelagert. Die Deichselvorrichtung 16, hier das Deichseljoch 58, weist eine Halteklammer 84 auf, wobei die Halteklammer 84 teilweise durch eine Ausnehmung im Deichseljoch 58 geführt ist und derart am Deichseljoch 58 angeordnet ist, dass die Deichsel 50 mittels der Halteklammer 84 und des zweiten Schwenklagers 56, hier ebenfalls als Kippbolzen ausgebildet, am Deichseljoch 58 um eine erste bzw. gemeinsame Hochachse 70, 74 schwenkbar gelagert ist. Die Halteklammer 84, und somit das Deichseljoch 58, und die Deichsel 50 sind mittels des zweiten Aktuators 82 gekoppelt. Es kann aber auch zusätzlich der Deichselarm 54 mittels der Halteklammer 84 und des dritten Schwenklagers 64, hier ebenfalls als Kippbolzen ausgebildet, am Deichseljoch 58 um eine zweite bzw. gemeinsame Hochachse 70, 74 schwenkbar gelagert sein.

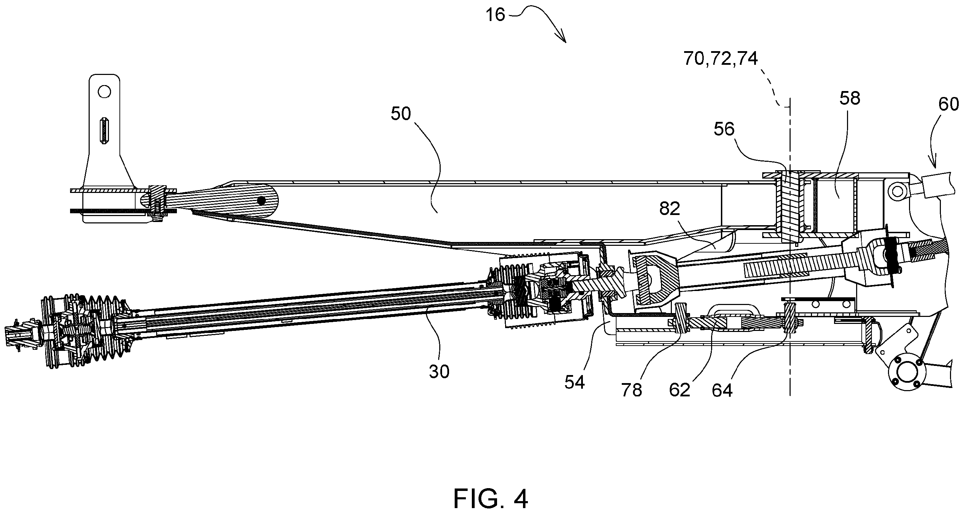

Figur 3 zeigt eine schematische Seitenansicht eines ersten Ausführungsbeispiels einer erfindungsgemässen Zugfahrzeug-Arbeitsgerät-Kombination 10, insbesondere mit einem erfindungsgemässen Arbeitsgeräts 14 und einer erfindungsgemässen Deichselvorrichtung 16. Die in Figur 3 gezeigte Darstellung des Arbeitsgeräts 14 bzw. der Deichselvorrichtung 16 entspricht im Wesentlichen den in den Figuren 1a und 1b und 2 gezeigten Arbeitsgeräten 14 bzw. Deichselvorrichtungen 16, sodass im Folgenden lediglich auf die Unterschiede eingegangen wird. Die Zugfahrzeug-Arbeitsgerät-Kombination 10 umfasst ein Zugfahrzeug 12 und ein mittels der Deichselvorrichtung 16 an das Zugfahrzeug 10 gekoppeltes Arbeitsgerät 14 in Form einer Rundballenpresse. Das Zugfahrzeug 12 ist ein landwirtschaftliches Fahrzeug in Form eines Traktors, wobei der grundsätzliche Aufbau eines Traktors als bekannt angenommen wird. Das Zugfahrzeug 10 baut sich auf einem tragenden Rahmen 18 auf, der sich auf lenkbaren Vorderrädern 20 und Hinterrädern 22 abstützt und eine Kabine 24 trägt, in der sich ein Bedienerarbeitsplatz 26 befindet. Die Vorderrädern 20 und/oder Hinterräder 22 werden durch einen Motor, welcher in Form eines Verbrennungsmotors ausgebildet ist, und einem mit diesem zusammenwirkenden Getriebe angetrieben. Das Arbeitsgerät 14 umfasst, neben dem Rahmen 32 und den Rädern 34, ein Bearbeitungselement 36 in Form eines Gutaufnehmers 38 zur Aufnahme von in einem Schwad 40 auf dem Erdboden liegenden Ernteguts und einen Förderer 42, der das vom Gutaufnehmer 38 aufgenommene Erntegut in einen Behälter 46 in Form eines Ballenpressraums 44 fördert. Ein fertig gestellter Ballen kann durch eine nach oben schwenkbare Rücktür 48 ausgeworfen und auf dem Feld abgelegt werden. Der mechanische Antrieb der angetriebenen Elemente des Arbeitsgeräts 14 erfolgt über eine Antriebskomponente 30, insbesondere eine Zapfwelle 30, vom Zugfahrzeug 10 her, obwohl auch ein Antrieb durch Elektromotoren denkbar wäre, die vom Zugfahrzeug 10 her mit elektrischer Energie versorgt werden. Das Arbeitsgerät 14 weist eine Steuereinheit 90 auf, die mit dem ersten Aktuator 80 verbunden ist. Die Steuereinheit 90 ist betreibbar, den ersten Aktuator 80 in einer Weise anzusteuern, dass der Kippwinkel 108 einstellbar ist. Darüber hinaus kann das Arbeitsgerät 14 auch einen zweiten Aktuator (Bezugszeichen 82, siehe Figuren 2 und 4) aufweisen. Die Steuereinheit 90 kann auch mit dem zweiten Aktuator 82 verbunden sein, und die Steuereinheit 90 kann derart betreibbar sein, den zweiten Aktuator 82 in einer Weise anzusteuern, dass ein Schwenkwinkel 106 einstellbar ist.

Figur 4 zeigt eine schematische Darstellung eines vierten Ausführungsbeispiels des erfindungsgemässen Arbeitsgeräts 14 mit einem vierten Ausführungsbeispiel einer erfindungsgemässen Deichselvorrichtung 16. Die in Figur 4 gezeigte Darstellung entspricht im Wesentlichen dem in den Figuren 1a-1b, 2 und 3 gezeigten Arbeitsgeräten 14 bzw. den gezeigten Deichselvorrichtungen 16, sodass im Folgenden lediglich auf die Unterschiede eingegangen wird. Die Deichselvorrichtung 16 umfasst die Deichsel 50, aus welcher sich der Deichselarm 54 erstreckt und der als Teil der Deichsel 50 ausgebildet ist, sowie das Deichseljoch 58. Die Deichsel 50 ist an einem Ende mittels des zweiten Schwenklagers 56 am Deichseljoch 58 um die erste Hochachse 70 schwenkbar gelagert. Der Deichselarm 54 umfasst eine Spanneinrichtung 62, wobei die Spanneinrichtung 62 an einem Ende der Spanneinrichtung 62 das dritte Schwenklager 64 umfasst. Dadurch ist die Spanneinrichtung 62 mittels des dritten Schwenklagers 64 am Deichseljoch 58 um die zweite Hochachse 72 schwenkbar gelagert. Die Spanneinrichtung 62 umfasst ausserdem am anderen Ende der Spanneinrichtung 62 ein viertes Schwenklager 78, mit welchem die Spanneinrichtung 62 schwenkbar am mit der Deichsel 50 fest verbundenen Teil des Deichselarms 54 gelagert ist.

Die erste und zweite Hochachse 70, 72 sind räumlich zusammenfallend angeordnet und als eine gemeinsame Hochachse 74 ausgebildet. Ebenso sind das zweite und dritte Schwenklager 56, 64 entlang der gemeinsamen Hochachse 74 zueinander beabstandet angeordnet. Ausserdem sind die Deichsel 50 und das Deichseljoch 58 mittels eines zweiten Aktuators 82 gekoppelt. Der zweite Aktuator 82 ist als Hydraulikzylinder ausgeführt. Der nachlaufende Arbeitsgeräteteil 60 oder das Deichseljoch 58 und/oder die Deichsel 50, sind mittels des zweiten Aktuators 82 derart um die erste und zweite Hochachse 70, 72 bzw. die gemeinsame Hochachse 74 schwenkbar, dass der Schwenkwinkel 106 zwischen der Deichsel 50 und dem nachlaufende Arbeitsgeräteteil 60 oder der Deichsel 50 und dem Deichseljoch 58 einstellbar ist. Im Weiteren ist die Antriebskomponente 30 zwischen dem zweiten und dritten Schwenklager 56, 64 angeordnet ist. Ausserdem ist die Antriebskomponente 30 zweiteilig ausgeführt, im Deichselarm 54 gelagert und durch den Deichselarm 54 geführt. Das erste und zweite Antriebskomponententeil sind mittels eines Universalgelenks miteinander verbunden. Das Universalgelenk ist im Deichselarm 54 gelagert. Das erste Antriebskomponententeil ist mit der Zapfwelle des Zugfahrzeugs und dem Universalgelenk koppelbar und das zweite Antriebskomponententeil ist mit dem Universalgelenk und der Antriebswelle des Arbeitsgeräts gekoppelt. Das zweite Antriebskomponententeil ist zwischen dem ersten und zweiten Schwenklager 52, 56 angeordnet.

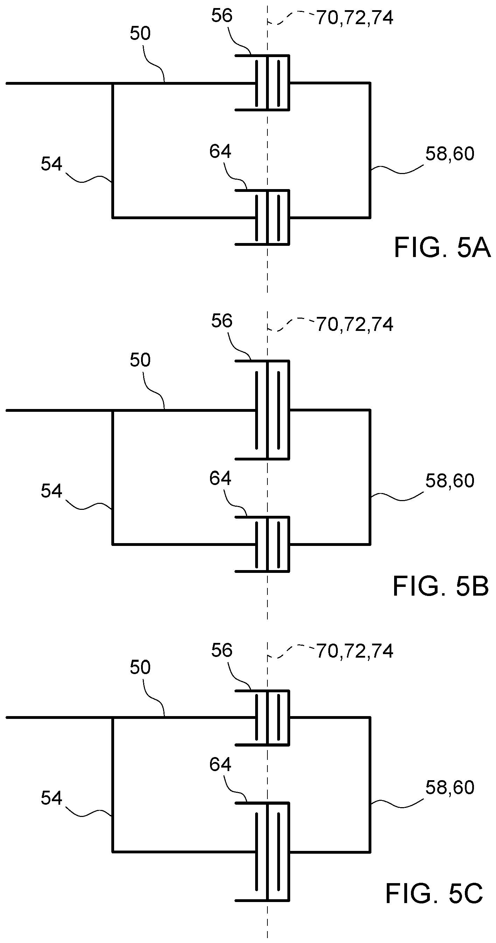

Die Figuren 5a bis 5c zeigen schematische Darstellungen mit einem fünften bis siebten Ausführungsbeispiel der erfindungsgemässen Deichselvorrichtung 16. Die in den Figuren 5a bis 5c gezeigten Ausführungen der Deichselvorrichtung 16 entsprechen im Wesentlichen den in den Figuren 1a bis 4 gezeigten Deichselvorrichtungen 16, sodass im Folgenden lediglich auf die Unterschiede eingegangen wird. Die in Figur 5a gezeigten zweiten und dritten Schwenklager 56, 64 sind gleich gross. In Figur 5b ist das zweite Schwenklager 56 grösser als das dritte Schwenklager 64, d.h. das zweite Schwenklager 56 ist für die Aufnahme grösserer Kräfte ausgestaltet, als das dritte Schwenklager 64. In Figur 5c ist die Situation genau umgekehrt, d.h. das zweite Schwenklager 56 ist kleiner als das dritte Schwenklager 64, d.h. das dritte Schwenklager 64 ist für die Aufnahme grösserer Kräfte ausgestaltet, als das zweite Schwenklager 56.

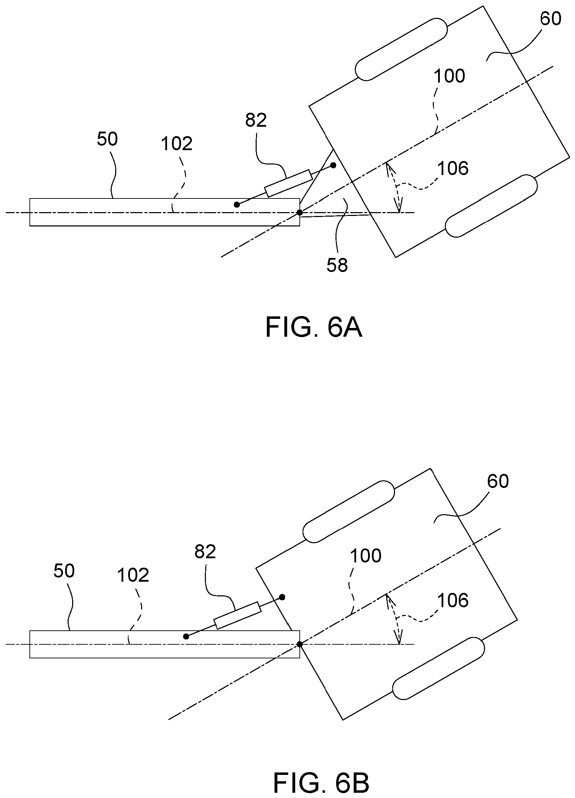

Die Figuren 6a und 6b zeigen schematische Darstellungen eines fünften und sechsten Ausführungsbeispiels des erfindungsgemässen Arbeitsgeräts 14. Die in den Figuren 6a und 6b gezeigte Darstellungen entsprechen im Wesentlichen den in den Figuren 1 bis 5c gezeigten Arbeitsgeräten 14 bzw. Deichselvorrichtungen 16, sodass im Folgenden lediglich auf die Unterschiede eingegangen wird. Wie den Figuren 6a und 6b zu entnehmen ist, entspricht der Schwenkwinkel 106, unabhängig davon, ob die Deichselvorrichtung 16 mit (Figur 6a) oder ohne (Figur 6b) das Deichseljoch 58 ausgebildet ist, einem Winkel der von einer Längsachse der Deichsel 102 und der Längsachse des Arbeitsgeräts 100 eingeschlossen ist.

## Patentansprüche

1. Landwirtschaftliches Arbeitsgerät mit einer Deichselvorrichtung (16) zum Ziehen des Arbeitsgeräts (14) mit einem Zugfahrzeug (12), wobei das Arbeitsgerät (14) ein Bodeneingriffsmittel (34) zur Abstützung auf dem Erdboden umfasst,
wobei die Deichselvorrichtung (16) an einem der Deichselvorrichtung (16) nachlaufenden Arbeitsgeräteteil (60) um eine zu einer horizontalen Querachse des Arbeitsgeräts (14) parallele oder räumlich zusammenfallende erste Schwenkachse (76) schwenkbar gelagert ist, und der nachlaufende Arbeitsgeräteteil (60) und die Deichselvorrichtung (16) mittels mindestens einen ersten Aktuator (80) gekoppelt sind, und die Deichselvorrichtung (16) mittels des ersten Aktuators (80) derart um die erste Schwenkachse (76) schwenkbar ist, dass ein Kippwinkel (108) zwischen der Deichselvorrichtung (16) und dem nachlaufenden Arbeitsgeräteteil (60) verstellbar ist, **dadurch gekennzeichnet, dass** die Deichselvorrichtung (16) eine Deichsel (50) und ein Deichseljoch (58) umfasst, und die Deichsel (50) an das Deichseljoch (58) gekoppelt ist, wobei der nachlaufende Arbeitsgeräteteil (60) und das Deichseljoch (58) mittels des ersten Aktuators (80) gekoppelt sind, und das Deichseljoch (58) mittels eines ersten Schwenklagers (52) am nachlaufenden Arbeitsgeräteteil (60) um die erste Schwenkachse (76) schwenkbar gelagert ist.

2. Arbeitsgerät nach Anspruch 1, **dadurch gekennzeichnet, dass** die Deichsel (50) an einem Ende mittels eines zweiten Schwenklagers (56) an einem der Deichselvorrichtung (16) nachlaufenden Arbeitsgeräteteil (60) oder am Deichseljoch (58) um eine erste Hochachse (70) schwenkbar gelagert ist und/oder die Deichselvorrichtung (16) einen Deichselarm (54) umfasst, der sich aus der Deichsel (50) erstreckt, und der Deichselarm (54) an einem Deichselarmende mittels eines dritten Schwenklagers (64) am nachlaufenden Arbeitsgeräteteil (60) oder dem Deichseljoch (58) um eine zweite Hochachse (72) schwenkbar gelagert ist.

3. Arbeitsgerät nach mindestens einem der vorangehenden Ansprüche, **dadurch gekennzeichnet, dass** die erste und zweite Hochachse (70, 72) parallel zueinander angeordnet sind oder die erste und zweite Hochachse (70, 72) räumlich zusammenfallend angeordnet und als eine gemeinsame Hochachse (74) ausgebildet sind und das zweite und dritte Schwenklager (56, 64) entlang der gemeinsamen Hochachse (74) zueinander beabstandet angeordnet sind.

4. Arbeitsgerät nach mindestens einem der vorangehenden Ansprüche, **dadurch gekennzeichnet, dass** der nachlaufende Arbeitsgeräteteil (60) und die Deichsel (50) oder das Deichseljoch (58) und die Deichsel (50) mittels mindestens einen zweite Aktuator (82) gekoppelt sind, wobei die Deichsel (50) und/oder der nachlaufende Arbeitsgeräteteil (60) oder die Deichsel (50) und/oder das Deichseljoch (58) mittels des zweiten Aktuators (82) derart um die erste und zweite Hochachse (70, 72) und/oder die gemeinsame Hochachse (74) schwenkbar sind, dass ein Schwenkwinkel (106) zwischen der Deichsel (50) und dem nachlaufende Arbeitsgeräteteil (60) verstellbar ist.

5. Arbeitsgerät nach mindestens einem der vorangehenden Ansprüche, **dadurch gekennzeichnet, dass** die Deichselvorrichtung (16) eine Halteklammer (84) aufweist, wobei die Halteklammer (84) teilweise durch eine Ausnehmung im Deichseljoch (58) geführt ist und derart am Deichseljoch (58) angeordnet ist, dass die Deichsel (50) mittels der Halteklammer (84) und des zweiten Schwenklagers (56) am Deichseljoch (58) um die erste und zweite Hochachse (70, 72) oder gemeinsame Hochachse (74) schwenkbar gelagert ist.

6. Arbeitsgerät nach mindestens einem der vorangehenden Ansprüche, **dadurch gekennzeichnet, dass** die Halteklammer (84) und die Deichsel (50) mittels des zweiten Aktuators (82) gekoppelt sind.

7. Arbeitsgerät nach mindestens einem der vorangehenden Ansprüche, **dadurch gekennzeichnet, dass** das erste und/oder zweite und/oder dritte und/oder vierte und/oder fünfte Schwenklager (52, 56, 64) ein Drehlager oder ein Kugellager sind.

8. Arbeitsgerät nach mindestens einem der vorangehenden Ansprüche, **dadurch gekennzeichnet, dass** das Arbeitsgerät (14) eine Steuereinheit (90) aufweist, die mit dem ersten Aktuator (80) verbunden ist, und die Steuereinheit (90) betreibbar ist, den ersten Aktuator (80) in einer Weise anzusteuern, dass der Kippwinkel (108) einstellbar ist, und/oder die Steuereinheit (90) mit dem zweiten Aktuator (82) verbunden ist, und die Steuereinheit (90) betreibbar ist, den zweiten Aktuator (82) in einer Weise anzusteuern, dass der Schwenkwinkel (106) einstellbar ist.

9. Zugfahrzeug-Arbeitsgerät-Kombination mit einem Zugfahrzeug (12) und einem Arbeitsgerät (14) nach einem der Ansprüche 1 bis 8.

## Claims

1. Agricultural implement with a drawbar device (16) for towing the implement (14) with a towing vehicle (12), wherein the implement (14) comprises a ground-engagement means (34) for support on the soil, wherein the drawbar device (16) on an implement part (60) that trails the drawbar device (16) is mounted so as to be pivotable about a first pivot axis (76) that is parallel to or coincides spatially with a horizontal transverse axis of the implement (14), and the trailing implement part (60) and the drawbar device (16) are coupled by means of at least one first actuator (80), and the drawbar device (16) by means of the first actuator (80) is pivotable about the first pivot axis (76) in such a manner that a tilt angle (108) between the drawbar device (16) and the trailing implement part (60) is adjustable, **characterized in that** the drawbar device (16) comprises a drawbar (50) and a drawbar yoke (58), and the drawbar (50) is coupled to the drawbar yoke (58), wherein the trailing implement part (60) and the drawbar yoke (58) are coupled by means of the first actuator (80), and the drawbar yoke (58) is mounted by means of a first pivot bearing (52) on the trailing implement part (60) such that it can be pivoted about the first pivot axis (76).

2. Implement according to Claim 1, **characterized in that** the drawbar (50) at one end, by means of a second pivot bearing (56), is mounted on an implement part (60) that trails the drawbar device (16) or on the drawbar yoke (58) so as to be pivotable about a first vertical axis (70), and/or the drawbar device (16) comprises a drawbar arm (54) which extends from the drawbar (50), and the drawbar arm (54) at one end of the drawbar arm, by means of a third pivot bearing (64), is mounted on the trailing implement part (60) or on the drawbar yoke (58) so as to be pivotable about a second vertical axis (72).

3. Implement according to at least one of the preceding claims, **characterized in that** the first and the second vertical axis (70, 72) are arranged so as to be parallel to one another, or the first and the second vertical axis (70, 72) are arranged so as to coincide spatially and are configured as a common vertical axis (74), and the second and the third pivot bearing (56, 64) are arranged so as to be spaced apart from one another along the common vertical axis (74).

4. Implement according to at least one of the preceding claims, **characterized in that** the trailing implement part (60) and the drawbar (50), or the drawbar yoke (58) and the drawbar (50), are coupled by means of at least one second actuator (82), wherein the drawbar (50) and/or the trailing implement part (60), or the drawbar (50) and/or the drawbar yoke (58), can be pivoted by means of the second actuator (82) about the first and the second vertical axis (70, 72) and/or the common vertical axis (74) in such a manner that a pivot angle (106) between the drawbar (50) and the trailing implement part (60) is adjustable.

5. Implement according to at least one of the preceding claims, **characterized in that** the drawbar device (16) has a holding bracket (84), wherein the holding bracket (84) in part is guided through a recess in the drawbar yoke (58) and is arranged on the drawbar yoke (58) in such a manner that the drawbar (50) is mounted by means of the holding bracket (84) and the second pivot bearing (56) on the drawbar yoke (58) so as to be pivotable about the first and the second vertical axis (70, 72) or the common vertical axis (74).

6. Implement according to at least one of the preceding claims, **characterized in that** the holding bracket (84) and the drawbar (50) are coupled by means of the second actuator (82).

7. Implement according to at least one of the preceding claims, **characterized in that** the first and/or the second and/or the third and/or the fourth and/or the fifth pivot bearing (52, 56, 64) are/is a rotary bearing or a ball bearing.

8. Implement according to at least one of the preceding claims, **characterized in that** the implement (14) has a control unit (90) which is connected to the first actuator (80), and the control unit (90) can be operated so as to actuate the first actuator (80) in such a manner that the tilt angle (108) is adjustable, and/or the control unit (90) is connected to the second actuator (82) and the control unit (90) can be operated so as to actuate the second actuator (82) in such a manner that the pivot angle (106) is adjustable.

9. Towing vehicle/implement combination having a towing vehicle (12) and an implement (14) according to one of Claims 1 to 8.

## Revendications

1. Outil de travail agricole comportant un dispositif à timon (16) servant à tirer l'outil de travail (14) à l'aide d'un véhicule de traction (12), l'outil de travail (14) comprenant un moyen de contact avec le sol (34) servant au support sur le sol,
le dispositif à timon (16) étant monté pivotant autour d'un premier axe de pivotement (76) parallèle à un axe transversal horizontal de l'outil de travail (14) ou coïncidant partiellement avec celui-ci au niveau d'une partie d'outil de travail (60) suivant le dispositif à timon (16), et la partie d'outil de travail (60) suiveuse et le dispositif à timon (16) étant accouplés au moyen d'au moins un premier actionneur (80), et le dispositif à timon (16) étant pivotant autour du premier axe de pivotement (76) au moyen du premier actionneur (80), de telle sorte qu'un angle d'inclinaison (108) entre le dispositif à timon (16) et la partie d'outil de travail (60) suiveuse soit réglable,
**caractérisé en ce que** le dispositif à timon (16) comprend un timon (50) et une fourche de timon (58), et le timon (50) est accouplé au niveau de la fourche de timon (58), la partie d'outil de travail (60) suiveuse et la fourche de timon (58) étant accouplées au moyen du premier actionneur (80), et la fourche de timon (58) étant montée pivotante autour du premier axe de pivotement (76) sur la partie d'outil de travail (60) suiveuse au moyen d'un premier palier de pivotement (52).

2. Outil de travail selon la revendication 1, **caractérisé en ce que** le timon (50) est monté pivotant autour d'un premier axe vertical (70) à une extrémité au moyen d'un deuxième palier de pivotement (56) sur une partie d'outil de travail (60) suivant le dispositif à timon (16) ou sur la fourche de timon (58) et/ou le dispositif à timon (16) comprend un bras de timon (54) qui s'étend à partir du timon (50), et le bras de timon (54) est monté pivotant autour d'un deuxième axe vertical (72) à une extrémité de bras de timon au moyen d'un troisième palier de pivotement (64) sur la partie d'outil de travail (60) suiveuse ou sur la fourche de timon (58).

3. Outil de travail selon au moins l'une des revendications précédentes, **caractérisé en ce que** le premier et le deuxième axe vertical (70, 72) sont disposés parallèlement l'un à l'autre ou le premier et le deuxième axe vertical (70, 72) sont disposés de manière à coïncider spatialement et sont réalisés sous la forme d'un axe vertical (74) commun et le deuxième et le troisième palier de pivotement (56, 64) sont disposés de manière espacée l'un par rapport à l'autre le long de l'axe vertical (74) commun.

4. Outil de travail selon au moins l'une des revendications précédentes, **caractérisé en ce que** la partie d'outil de travail (60) suiveuse et le timon (50) ou la fourche de timon (58) et le timon (50) sont accouplés au moyen d'au moins un deuxième actionneur (82), le timon (50) et/ou la partie d'outil de travail (60) suiveuse ou le timon (50) et/ou la fourche de timon (58) sont pivotants autour du premier et du deuxième axe vertical (70, 72) et/ou de l'axe vertical (74) commun au moyen du deuxième actionneur (82), de telle sorte qu'un angle de pivotement (106) entre le timon (50) et la partie d'outil de travail (60) suiveuse soit réglable.

5. Outil de travail selon au moins l'une des revendications précédentes, **caractérisé en ce que** le dispositif à timon (16) présente un étrier de retenue (84), l'étrier de retenue (84) étant guidé partiellement à travers un évidement dans la fourche de timon (58) et étant disposé sur la fourche de timon (58) de telle sorte que le timon (50) soit monté pivotant autour du premier et du deuxième axe vertical (70, 72) ou de l'axe vertical (74) commun au moyen de l'étrier de retenue (84) et du deuxième palier de pivotement (56) sur la fourche de timon (58).

6. Outil de travail selon au moins l'une des revendications précédentes, **caractérisé en ce que** l'étrier de retenue (84) et le timon (50) sont accouplés au moyen du deuxième actionneur (82).

7. Outil de travail selon au moins l'une des revendications précédentes, **caractérisé en ce que** le premier et/ou le deuxième et/ou le troisième et/ou le quatrième et/ou le cinquième palier de pivotement (52, 56, 64) sont un palier de rotation ou un palier à billes.

8. Outil de travail selon au moins l'une des revendications précédentes, **caractérisé en ce que** l'outil de travail (14) présente une unité de commande (90) qui est reliée au premier actionneur (80), et l'unité de commande (90) peut fonctionner pour commander le premier actionneur (80) d'une manière telle que l'angle d'inclinaison (108) soit ajustable, et/ou l'unité de commande (90) est reliée au deuxième actionneur (82), et l'unité de commande (90) peut fonctionner pour commander le deuxième actionneur (82) d'une manière telle que l'angle d'inclinaison (106) soit ajustable.

9. Combinaison de véhicule de traction et d'outil de travail comportant un véhicule de traction (12) et un outil de travail (14) selon l'une des revendications 1 à 8.
